# EUROPEAN PATENT APPLICATION

(11) **EP 4 207 081 A1**
(43) Date of publication of application: **05.07.2023**
(21) Application number: 21877901.5
(22) Date of filing: 28.09.2021
(51) Int. Cl.: G06T 17/05, G06T 7/70, G06T 7/11, G06T 7/90, G06T 7/50

(54) **ELECTRONIC DEVICE AND CONTROL METHOD THEREFOR**

(30) Priority: 06.10.2020 KR 20200128545; 01.04.2021 KR 20210042864
(71) Applicant: Samsung Electronics Co., Ltd., Suwon-si, Gyeonggi-do 16677 (KR)
(72) Inventor: LEE, Junghwan, Suwon-si Gyeonggi-do 16677 (KR); KIM, Sungwon, Suwon-si Gyeonggi-do 16677 (KR); KIM, Saeyoung, Suwon-si Gyeonggi-do 16677 (KR); LEE, Yoojeong, Seoul 04378 (KR); LEE, Taehee, Suwon-si Gyeonggi-do 16677 (KR)
(74) Representative: Appleyard Lees IP LLP
(86) International application number: PCT/KR2021/013225
(87) International publication number: WO 2022/075649

(57) **Abstract**

An electronic apparatus is disclosed. The electronic apparatus includes a camera and a processor. The processor is configured to identify a first area of a threshold size including an object of interest in an image obtained by the camera, identify depth information of the object of interest and depth information of a plurality of background objects included in an area excluding the object of interest in the first area, and identify a background object where the object of interest is located from among the plurality of background objects based on a difference between the depth information of the object of interest and the depth information of each of the plurality of background objects.

## Description

### [Technical Field]

This disclosure relates to an electronic apparatus that identifies location of an object based on depth information of the object included in an image and a controlling method thereof.

### [Background Art]

Recently, the user of various types of electronic apparatuses for identifying an object and providing information thereon has become common at home. In particular, in the case of an object whose location continuously changes, such as a pet, various methods for identifying the exact location of the object have been proposed. For example, a method of identifying an object by inputting a plurality of images obtained from various locations into a neural network model and generating a three-dimensional map based thereon has been proposed. However, for this method, a plurality of images having different views are required. In addition, when the location of an object included in each image is not visually clear, there is a problem in that the exact location of the object cannot be identified.

Accordingly, there has been a continuous demand for a method for identifying the exact location of an object based on an image of the same view obtained through a single camera (or a camera module).

### [Detailed Description of the Disclosure]

### [Technical Task]

The present disclosure is to provide an electronic apparatus that identifies a background object in which an object of interest is located based on a difference between depth information of the object of interest and depth information of a plurality of background objects and a controlling method thereof.

### [Technical Solution]

An electronic apparatus according to an embodiment includes a camera and a processor configured to identify a first area of a threshold size including an object of interest in an image obtained by the camera, identify depth information of the object of interest and depth information of a plurality of background objects included in an area excluding the object of interest in the first area, and identify a background object where the object of interest is located from among the plurality of background objects based on a difference between the depth information of the object of interest and the depth information of each of the plurality of background objects.

The processor may be configured to identify an imaging angle of the camera with respect to the object of interest based on location information of the first area on the image, and identify a background object where the object of interest is located from among the plurality of background objects based on height information of the camera, an imaging angle of the camera and depth information of each of the plurality of background objects.

The processor may be configured to, based on the object of interest not being identified in a subsequent image that captured the same space after the object of interest is identified in the image obtained by the camera, identify a second area corresponding to the first area in the subsequent image and identify depth information of a plurality of background objects included in the second area, and identify a background object where the object of interest is located from among the plurality of background objects based on depth information of the object of interest identified in the first area, depth information of the plurality of background objects identified in the first area and depth information of the plurality of background objects identified in the second area.

The processor may be configured to, based on identifying a first area of a threshold size including the object of interest in the image, identify whether a ratio of the object of interest in the first area is equal to or greater than a threshold ratio, based on identifying that the ratio is equal to or greater than the threshold ratio, identify an area larger than the threshold size in the image as a third area, and identify depth information of the object of interest and depth information of a plurality of background objects included in an area excluding the object of interest in the third area.

The processor may be configured to obtain a first area of a threshold size including the object of interest by inputting the obtained image to a neural network model, and the neural network model may be trained to, based on an image being input, output an object of interest included in the image and area identification information including a plurality of background objects.

The camera may include an RGB photographing module and a depth photographing module, and the processor may be configured to identify a first area of a threshold size including an object of interest in an RGB image obtained by the RGB photographing module and identify depth information of the object of interest and depth information of a plurality of background objects included in an area excluding the object of interest in the first area based on a depth image corresponding to the RGB image obtained by the depth photographing module.

The processor may be configured to obtain a segmentation area corresponding to each of the plurality of background objects by inputting the first area to a neural network model, and identify depth information of a plurality of background objects based on depth information of each segmentation area, and the neural network model may be trained to, based on an image being input, output area identification information corresponding to each of a plurality of background objects included in the image.

The processor may be configured to identify a smallest value from among differences between the depth information of the object of interest and the depth information of each of the plurality of background objects, and identify a background object corresponding to the smallest value as a background object where the object of interest is located.

The apparatus may further include a memory where map information is stored, and the processor may be configured to identify location information of the object of interest based on location information of the identified background object, and update the map information based on the identified location information of the object of interest.

A controlling method of an electronic apparatus according to an embodiment includes identifying a first area of a threshold size including an object of interest in an image obtained by a camera, identifying depth information of the object of interest and depth information of a plurality of background objects included in an area excluding the object of interest in the first area, and identifying a background object where the object of interest is located from among the plurality of background objects based on a difference between the depth information of the object of interest and the depth information of each of the plurality of background objects.

The identifying a background object where the object of interest is located may include identifying an imaging angle of the camera with respect to the object of interest based on location information of the first area on the image, and identifying a background object where the object of interest is located from among a plurality of background objects based on height information of the camera, an imaging angle of the camera and depth information of each of the plurality of background objects.

The method may further include, based on the object of interest not being identified in a subsequent image that captured the same space after the object of interest is identified in the image obtained by the camera, identifying a second area corresponding to the first area in the subsequent image and identifying depth information of a plurality of background objects included in the second area, and the identifying a background object where the object of interest is located may include identifying a background object where the object of interest is located from among the plurality of background objects based on depth information of the object of interest identified in the first area, depth information of each of the plurality of background objects identified in the first area and depth information of the plurality of background objects identified in the second area.

The identifying depth information may include, based on identifying a first area of a threshold size including the object of interest in the image, identifying whether a ratio of the object of interest in the first area is equal to or greater than a threshold ratio, based on identifying that the ratio is equal to or greater than the threshold ratio, identifying an area larger than the threshold size in the image as a third area, and identifying depth information of the object of interest and depth information of a plurality of background objects included in an area excluding the object of interest in the third area.

The identifying a first area may include obtaining a first area of a threshold size including the object of interest by inputting the obtained image to a neural network model, and the neural network model may be trained to, based on an image being input, output an object of interest included in the image and area identification information including a plurality of background objects.

The identifying a first area may include identifying a first area of a threshold size including an object of interest in an RGB image obtained by the camera, and the identifying depth information may include identifying depth information of the object of interest and depth information of a plurality of background objects included in an area excluding the object of interest in the first area based on a depth image corresponding to the RGB image obtained by the camera.

### [Effect of Invention]

According to various embodiments described above, the electronic apparatus may accurately identify a background object in which an object of interest is actually located from among background objects adjacent to the object of interest on an image and thus, the convenience of the user who is using the electronic apparatus is enhanced.

### [Brief Description of Drawings]

FIG. 1 is a view provided to explain a method of identifying an object for helping understanding of the present disclosure;
FIG. 2 is a block diagram provided to explain configuration of an electronic apparatus according to an embodiment;
FIGS. 3A and 3B are views provided to explain an image analysis operation through a neural network model according to an embodiment;
FIG. 4 is a view provided to explain depth information acquisition information of objects included in an area of an image according to an embodiment;
FIGS. 5A and 5B are views provided to explain an operation of identifying a location of an object of interest based on depth information according to an embodiment;
FIGS. 6A and 6B are views provided to explain an operation of identifying an imaging angle based on a location of an object on an image according to an embodiment;
FIGS. 7A and 7B are views provided to explain an operation of identifying a location of an object based on an imaging angle and depth information according to an embodiment;
FIGS. 8A and 8B are views provided to explain an operation of identifying an object based on a plurality of images obtained at different time points according to an embodiment;
FIG. 9 is a view provided to explain an operation of re-identifying an image according to a ratio of an object of interest in one area of an image according to an embodiment;
FIGS. 10A and 10B are views provided to explain a map information update operation according to an embodiment;
FIG. 11 is a block diagram provided to explain configuration of an electronic apparatus in detail according to an embodiment;
FIG. 12 is a flowchart provided to explain a controlling method according to an embodiment; and
FIG. 13 is a flowchart provided to explain a controlling method according to another embodiment.

### [Detailed Description of Exemplary Embodiments]

Hereinafter, the disclosure will be described in detail with reference to the accompanying drawings.

The terms used in the example embodiments of the disclosure are general terms which are widely used now and selected considering the functions of the disclosure. However, the terms may vary depending on the intention of a person skilled in the art, a precedent, or the advent of new technology. In addition, in a specified case, the term may be arbitrarily selected. In this case, the meaning of the term will be explained in the corresponding description. Therefore, terms used in the disclosure may be defined based on a meaning of the terms and contents described in the disclosure, not simply based on names of the terms.

As used herein, the expression "have", "may have", "include", or "may include" refers to the existence of a corresponding feature (e.g., numeral, function, operation, or constituent element such as component), and does not exclude one or more additional features.

The expression of "at least one of A and/or B" is to be understood as indicating any one of "A" or "B" or "A and B".

The expression "a first", "a second", "the first", or "the second" used in various example embodiments of the disclosure may modify various components regardless of their order and/or the importance but does not limit the corresponding components.

In case that any component (for example, a first component) is mentioned to be "(operatively or communicatively) coupled with/to" or "connected to" another component (for example, a second component), it is to be understood that any component is directly coupled to another component or coupled to another component through still another component (for example, a third component).

A singular expression includes a plural expression as long as they are clearly distinguished in the context. In the application, it should be understood that the terms such as "comprising", "including" are intended to express that features, numbers, steps, operations, constituent elements, part, or combinations thereof described in the specification are present and do not exclude existence or additions of one or more other features, numbers, steps, operations, constituent elements, part, or combinations thereof.

In an embodiment, a "module" or a "unit" performs at least one function or operation, and may be implemented as hardware, software, or a combination of hardware and software. In addition, a plurality of "modules" or a plurality of "units" may be integrated into at least one module and implemented as at least one processor, except for a "module" or a "unit" that needs to be implemented as specific hardware.

In this disclosure, the term "user" may indicate a person who uses an electronic apparatus. An embodiment of the disclosure will be described in detail with reference to the accompanying drawings.

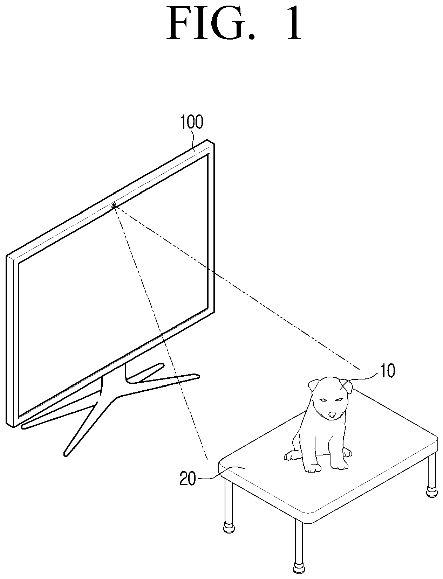

FIG. 1 is a view provided to explain a method of identifying an object for helping understanding of the present disclosure.

According to FIG. 1, an electronic apparatus, for example, a TV 100 may identify various objects located in an indoor space. Here, the objects may include an object whose location continuously changes, such as a pet dog 10, and an object whose location does not change without user intervention, such as a table 20.

The TV 100 may identify location information of the pet dog 10, and provide the location information to the user. Specifically, the pet dog 10 may be located on the table 20 as illustrated in FIG. 1 or may be located on the ground of the space. The TV 100 may identify whether the pet dog 10 is located on an object such as the table 20 or on the ground, and provide the identified location information to the user.

According to an embodiment, the TV 100 may transmit the identified location information to a mobile device used by the user, and the user may receive a user interface (UI) corresponding to the location information of the pet dog 10 through the mobile device. Through this, the user may check the location of the pet dog 10 in the indoor space even from outdoors, and may remotely feed the pet dog 10 or interact with the pet dog 10.

In the present disclosure, in describing the operation of the electronic apparatus 100, an object of which location information is desired by the user, from among a plurality of objects located indoors, will be referred to as `an object of interest' and the other objects will be referred to as `background objects.'

Hereinafter, various embodiments in which an electronic apparatus such as the TV 100 may identify a background object where an object of interest is located based on a difference between depth information of the object of interest and depth information of a plurality of background objects will be described in greater detail.

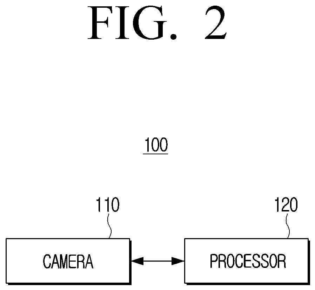

FIG. 2 is a block diagram provided to explain configuration of an electronic apparatus according to an embodiment.

According to FIG. 2, the electronic apparatus 100 may include a camera 110 and a processor 120.

The camera 110 may obtain an image by capturing an area within a field of view (FoV) of the camera.

The camera 110 may include a lens for focusing an optical signal received by being reflected by an object, for example, stored food, to an image sensor, and an image sensor capable of sensing an optical signal. Here, the image sensor may include a 2D pixel array that is divided into a plurality of pixels.

Here, the camera 110 may include a wide-angle (RGB) camera and an infrared camera, and the camera 110 according to an embodiment may be implemented as a depth camera.

The processor 120 controls the overall operations of the electronic apparatus 100. Specifically, the processor 120 may be connected to each component of the electronic apparatus 100 and control the overall operations of the electronic apparatus 100. For example, the processor 120 may be connected to the camera 110 and control the operations of the electronic apparatus 100.

According to an embodiment, the processor 120 may be referred to as various names such as a digital signal processor (DSP), a microprocessor, a central processing unit (CPU), a micro controller unit (MCU), a micro processing unit (MPU), a neural processing unit (NPU), a controller, an application processor (AP), and the like, but in the present disclosure, it will be referred to as the processor 120.

The processor 120 may be implemented as System on Chip (SoC) or large scale integration (LSI), or in the form of a Field Programmable gate array (FPGA). In addition, the processor 120 may include a volatile memory such as SRAM, etc.

A function related to artificial intelligence according to an embodiment may be executed through the processor 120 and a memory (not shown). The processor 120 may consist of one or a plurality of processors. In this case, the one or the plurality of processors may be general-purpose processors, such as CPUs, APs, digital signal processors (DSP), or the like, graphics-only processors, such as GPUs, vision processing units (VPU), or artificial intelligence-only processors, such as NPU. One or a plurality of processors 120 control to process input data according to a predefined action rule or AI model stored in a memory (not shown). Alternatively, when one or a plurality of processors 120 are AI-only processors, the AI-only processor may be designed with a hardware structure specialized for processing a specific AI model.

The predefined action rule or AI model are created through learning. Here, creation through learning means that a basic AI model is trained using a plurality of learning data by a learning algorithm, so that a predefined action rule or AI model set to perform a desired characteristic (or purpose) is created. Such learning may be performed in a device itself in which AI according to the disclosure is performed, or may be performed through a separate server and/or system. Examples of the learning algorithm include, but are not limited to, supervised learning, unsupervised learning, semi-supervised learning, or reinforcement learning.

The processor 120 according to an embodiment may identify a first area of a threshold size including an object of interest in an image obtained by the camera 110. Here, the first area according to an embodiment may be an area in a square form, but is not limited thereto. However, in the following description, it is assumed that a storage area is in a square form for convenience of explanation.

In addition, the processor 120 may identify depth information of an object of interest and depth information of a plurality of background objects included in an area excluding the object of interest in the first area. Here, the depth information may mean information about a distance from the camera to the object or a distance between the camera 110 and a point where the object is located on the ground. In the present disclosure, it is assumed that the depth information is information about a distance from the camera 110 to the object.

In addition, the processor 120 may identify a background object where the object of interest is located from among a plurality of background objects based on a difference between the depth information of the object of interest and the depth information of each of the plurality of background objects.

Here, the processor 120 may identify an imaging angle of the camera regarding the object of interest based on height information of the camera 110 and location information of the first area on the image. The imaging angle may be an angle formed by a virtual line segment from the camera 110 to a specific object on the image with the ground. For example, when capturing an object located at the same height as the camera 110, the imaging angle may be 0 degrees.

In addition, the processor 120 may identify a background object where the object of interest is located from among background objects based on the height information of the camera, the imaging angle of the camera and depth information of each of the plurality of background objects.

Meanwhile, the processor 120 may re-capture the same space at an arbitrary point in time after the object of interest is identified in the image obtained by the camera 110. Here, the processor 120 may control the camera 110 to obtain a subsequent image having the same view as the one that is previously captured.

When the object of interest is not identified in the obtained subsequent image, the processor 120 may identify a second area corresponding to the first area in the subsequent image. The second area according to an embodiment may be an area having the same shape and size as the first area. For example, even if the object of interest is not identified in the subsequent image, the processor 120 may identify the second area having a threshold size as in the case where the first area is previously identified in the image including the object of interest.

In addition, when the object of interest is not identified in the obtained subsequent image, the processor 120 may identify the second area corresponding to the first area in the subsequent image. The second area according to an embodiment may be an area having the same shape and size as the first area. For example, even if the object of interest is not identified in the subsequent image, the processor 120 may identify the second area having a threshold size as in the case where the first area is identified in the image including the object of interest previously.

In addition, the processor 120 may identify depth information of a plurality of background objects included in the second area, and identify a background object where the object of interest is located from among the plurality of background objects based on depth information of the object of interest identified in the first area, depth information of each of the plurality of background objects identified in the first area and depth information of the plurality of background objects identified in the second area.

Meanwhile, when the first area of a threshold size including the object of interest is identified in the image, the processor 120 may identify whether the ratio of the object of interest in the first area is equal to or greater than a threshold ratio. In addition, when it is identified that the ratio of the object of interest in the first area is equal to or greater than the threshold ratio, the processor 120 may identify an area larger than the threshold size in the image as the third area. Here, the processor 120 may identify depth information of the object of interest and depth information of a plurality of objects included in an area excluding the object of interest in the third area.

Meanwhile, the processor 120 may obtain the first area of a threshold size including the object of interest by inputting the obtained image to a neural network model. Here, the neural network model may be a model trained to, when an image is input, output an object of interest included in the image and output area identification information including a plurality of background objects.

Meanwhile, the camera 110 may include a red-green-blue (RGB) photographing module and a depth photographing module. Here, the RGB photographing module may be a module that obtains an image in a visible light wavelength band. Meanwhile, the depth photographing module may include a depth camera, and may be a module that obtains a depth image. Here, the depth image may be an image having the same view corresponding to an RGB image, and the processor 120 may obtain distance information (hereinafter, referred to as depth information) from the camera to the object.

Specifically, the processor 120 may identify the first area of a threshold size including the object of interest in the RGB image obtained by the RGB photographing module, and identify depth information of the object of interest and depth information of a plurality of background objects included in an area excluding the object of interest in the first area based on the depth image obtained by the depth photographing module.

Meanwhile, the processor 120 may obtain segmentation areas corresponding to an area occupied by each of a plurality of background objects included in the first area by inputting the first area to a neural network model, and identify depth of the plurality of background obj ects based on depth information of each of the segmentation areas. Here, the neural network model may be a model trained to, when an image is input, output area identification information corresponding to each of a plurality of background objects included in the image.

Meanwhile, the processor 120 may identify the smallest value from among differences between the depth information of the object of interest and the depth information of each of a plurality of background objects, and identify a background object corresponding to the smallest value as a background object where the object of interest is located. For example, the processor 120 may identify a background object having a depth most similar to the depth of the object of interest as a background object where the object of interest is located.

Meanwhile, the electronic apparatus 100 may further include a memory where map information is stored. The processor 120 may identify location information of the object of interest based on location information of the identified background object, and update map information based on the identified location information of the object of interest. Here, the update may mean the operation of modifying all or part of the map information previously stored by the electronic apparatus 100 and newly storing the same.

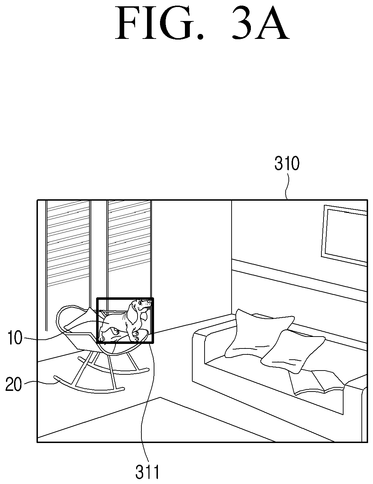

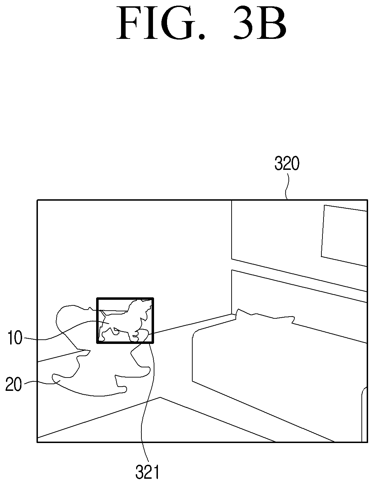

FIGS. 3A and 3B are views provided to explain an image analysis operation through a neural network model according to an embodiment.

FIG. 3A illustrates an RGB image 310 obtained by the electronic apparatus 100. The image 310 may include the peg dog 10 that is an object of interest and a chair 20 that is a background object. The background object may include various objects such as a ground, a wall, a bed, and a carpet, in addition to the chair 20.

The electronic apparatus 100 according to an embodiment may obtain a first area 311 of a threshold size including the pet dog 10 by inputting the obtained image 310 to a neural network model. Here, the neural network model may be a model trained to, when an image is input, output an object of interest included in the image and area identification information including a plurality of objects.

The electronic apparatus according to an embodiment may store a neural network model, but may download and use a neural network model stored in an external server.

Referring to FIG. 3B, the electronic apparatus 100 may obtain an image 320 for identifying a segmentation area based on the RGB image 310.

According to an embodiment, the image 320 for identifying a segmentation area may mean an area occupied by each of a plurality of background objects (e.g., 20) included in the RGB image 310. For example, the segmentation area may be an area that is obtained as a result of identifying an individual object located in a space based on a color, a surface pattern, a shading, etc. corresponding to the object.

Meanwhile, as illustrated in FIG. 3B, the electronic apparatus 100 may identify a segmentation area with respect to the entire RGB image 310, but may obtain an image 321 as a result of identifying a segmentation area only with respect to the first segmentation area 311.

Specifically, the electronic apparatus 100 may obtain the result image 321 including segmentation areas corresponding to each of the plurality of background objects (e.g., 20) by inputting the first area 311 to a neural network model, and identify depth information of each of the segmentation areas.

Here, the neural network model may be a model that is trained to, when an image is input, output area identification information corresponding to each of a plurality of background objects included in the image. In addition, the input image used to train the neural network model may include real image capturing a real space and synthetic data generated artificially. By training the neural network model through various types of images, the electronic apparatus 100 may identify each segmentation area more accurately.

In the above description, the electronic apparatus 100 identifies an area corresponding to a background object excluding the object of interest as a segmentation area, but the electronic apparatus 100 may identify an area corresponding to all objects included in the first area 311 including the object of interest as a segmentation area.

In this case, the electronic apparatus may obtain segmentation areas corresponding to the object of interest 10 and each of the plurality of objects (e.g., 20, etc.) by inputting the first area 311 to a neural network model, and identify depth information of each of the segmentation areas.

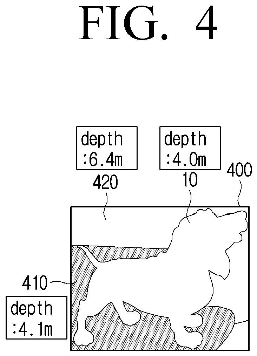

FIG. 4 is a view provided to explain depth information acquisition information of objects included in an area of an image according to an embodiment.

FIG. 4 illustrates an image 400 as a result of identifying a segmentation area with respect to the first area as described above relation to FIG. 3B.

Referring to FIG. 4, the electronic apparatus 100 according to an embodiment may identify depth information of each segmentation area, and identify depth information of a plurality of background objects corresponding to each area based thereon.

Specifically, the electronic apparatus 100 may identify depth information of each of a segmentation area 410 corresponding to a chair and a segmentation area 420 corresponding to a wall in the result image 400 based on a depth image obtained by a camera.

Here, different points included in one segmentation area may have different depth values. This is because the distance from the camera 110 to each point on the surface of one object would be different. For example, in the segmentation area 410 corresponding to a chair, the depth value of the portion adjacent to the foot of the pet dog 10 may be 4.1m, and the depth value of the portion adjacent to the pet dog 10, etc. may be 4.3m.

In this case, the electronic apparatus 100 may identify a representative depth value corresponding to a segmentation area according to a predetermined criterion. Specifically, the electronic apparatus 100 may identify the depth value of the point adjacent to the lowermost end of the object of interest such as the pet dog 10 as the representative depth value corresponding to the segmentation area including the corresponding point.

In addition, the electronic apparatus 100 may identify a representative depth value as in the background object. Specifically, the electronic apparatus 100 may identify a depth value of the portion corresponding to the foot of the pet dog 10 as the representative depth value of the object of interest.

Further, the electronic apparatus 100 may identify the background object in which the object of interest 10 is located based on the representative depth value of the object of interest 10 and the representative depth value of the plurality of background objects 410, 420. Specifically, the electronic apparatus 100 may identify the background object of which depth value has the smallest difference from the representative depth value of the object of interest 10 as the background object in which the object of interest 10 is located. In FIG. 4, as the representative depth value of the chair is 4.1m and the representative depth value of the wall is 6.4m, the electronic apparatus 100 may identify that the background object in which the pet dog 10 is located is the chair.

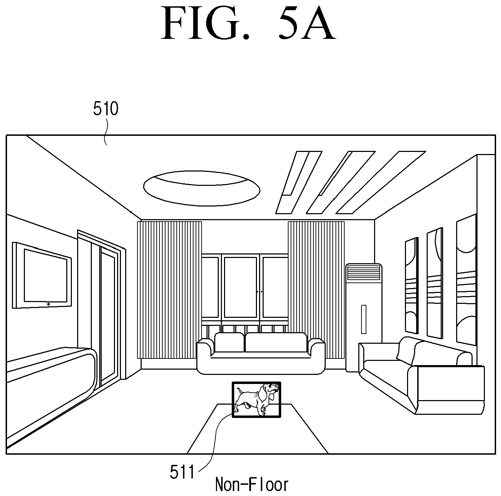

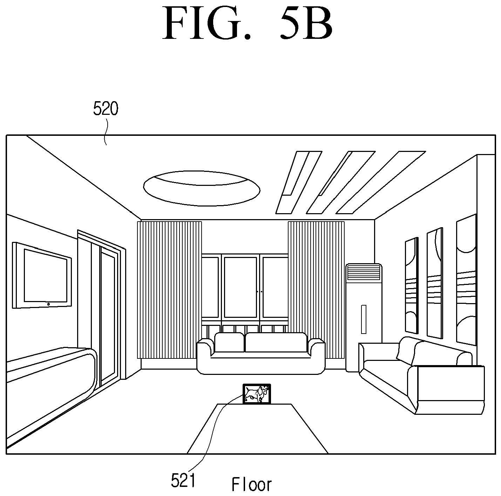

FIGS. 5A and 5B are views provided to explain an operation of identifying a location of an object of interest based on depth information according to an embodiment.

According to FIG. 5A, the electronic apparatus 100 may identify a first area 511 including a pet dog that is an object of interest in an obtained image 510, and identify each of the depth information of the object of interest included in the first area 511 and the depth information of a background object excluding the object of interest.

Here, the electronic apparatus 100 may identify a table of which depth value has the smallest difference from the depth value of the pet dog from among background objects included in the first area 511 as the background object where the pet dog is located. In this case, the electronic apparatus 100 may provide a user with a UI indicating that the pet dog is located on another object (non-floor) rather than on the ground (floor).

Here, the UI provided to the user may be displayed in the form of a point cloud. The point cloud is a set of points that belong to a specific coordinate system, and the electronic apparatus 100 may generate a UI representing each object as a point having a coordinate value corresponding to the surface of each object based on the depth image of each object obtained through the camera 110.

According to FIG. 5B, the electronic apparatus 100 may identify a first area 521 where a pet dog that is an object of interest is included in an obtained image 520, and identify each of the depth information of the object of interest included in the first area 521 and the depth information of a background object excluding the object of interest.

Here, the electronic apparatus 100 may identify a ground of which depth value has the smallest difference from the depth value of the pet dog from among background objects included in the first area 521 as the background object where the pet dog is located. In this case, the electronic apparatus 100 may provide a user with a UI indicating that the pet dog is located on the ground (floor).

In FIGS. 5A and 5B, although the background object where the pet dog is located is not visually clear, the electronic apparatus 100 according to an embodiment may accurately identify the background object where the pet dog is located by using the depth information of the pet dog and the depth information of background objects distributed in an area including the pet dog.

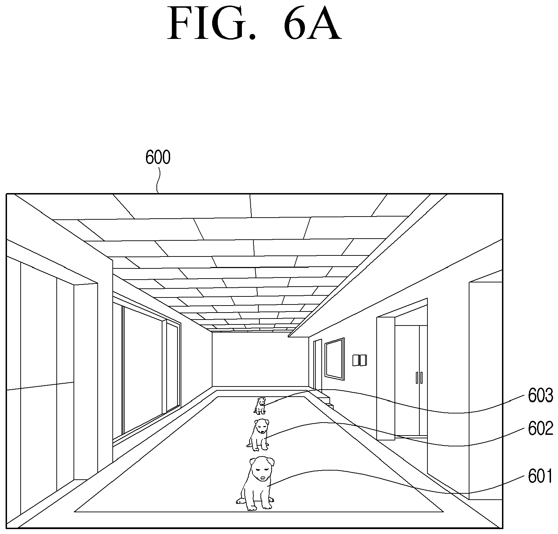

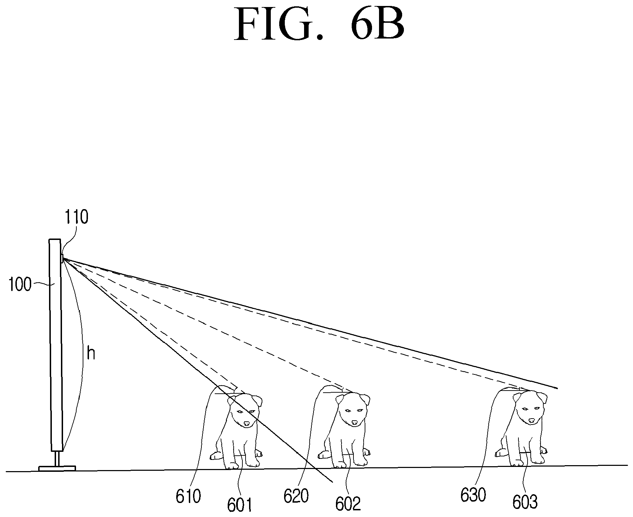

FIGS. 6A and 6B are views provided to explain an operation of identifying an imaging angle based on a location of an object on an image according to an embodiment.

Referring to FIG. 6A, even objects having the same size may have different locations on an image 600 according to a distance from the electronic apparatus 100. Specifically, an object 601 located closest to the electronic apparatus 100 may be located at the bottom of the image 600. As the distance between the electronic apparatus 100 and an object increases, the location on the image 600 may gradually move to the top and an object 603 located farthest from the electronic apparatus 100 may be located at the top of the image 600.

Referring to FIG. 6B, the electronic apparatus 100 may identify an imaging angle of the camera 110 with respect to each object based on the location information of each object on an image. Here, the imaging angle may be an angle formed by a virtual line segment from the camera 110 to a specific object on the image with the ground.

Specifically, the electronic apparatus 100 may identify that an imaging angle 610 regarding the object 601 located at the bottom of the image is the largest from among the three objects 601, 602, 603, and identify that an imaging angle 630 regarding the object 603 located at the top of the image is the smallest from among the three objects 601, 602, 603.

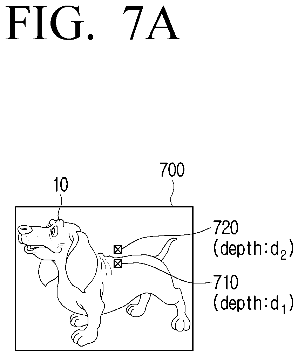

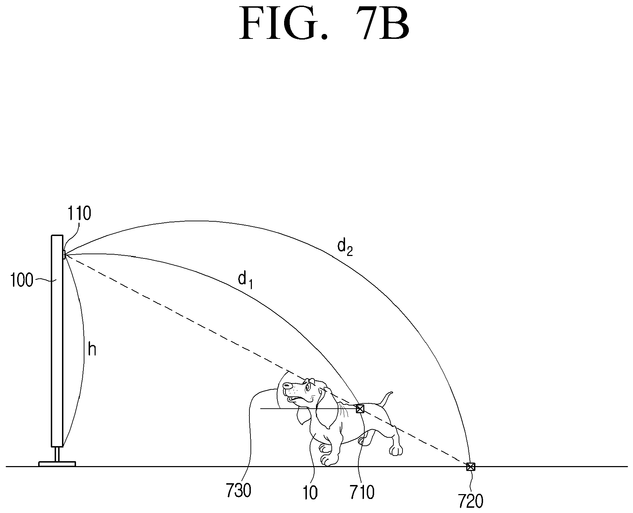

FIGS. 7A and 7B are views provided to explain an operation of identifying a location of an object based on an imaging angle and depth information according to an embodiment.

According to FIG. 7A, the pet dog 10 that is the object of interest may be located on the ground in a space. In this case, a depth value (d1) regarding a part of the pet dog 10 and a depth value (d2) regarding a part of the ground may be different. Even though the background object where the pet dog 10 is actually located is the ground, when the pet dog 10 and the ground have different depth values, the electronic apparatus 100 may identify that the background object where the pet dog 10 is located is the ground based on the height information of the camera, the imaging angle of the camera and the depth information of the ground.

According to FIG. 7B, the camera 110 according to an embodiment may have a certain height (h) from the ground. The electronic apparatus 100 according to an embodiment may identify that the depth value corresponding to a part 710 of the pet dog is d1, and identify that the depth value corresponding to a point 720 on the ground adjacent to the part 710 of the pet dog on a first area 700 including the pet dog 10 is d2.

In this case, the electronic apparatus 100 may identify the imaging angle of the camera 110 regarding the pet dog 10 based on the location information of the first area 700 on the image, and identify that the background object where the pet dog 10 is located is the ground based on the height (h) of the camera 110, the imaging angle of the camera 110 and the depth value (d2) corresponding to the one point 720 on the ground.

Specifically, since a trigonometric ratio is established between the depth value (d2) corresponding to one point 720 on the ground, the height (h) of the camera 110 and the imaging angle, the electronic apparatus 100 may identify that the ground having a depth value different from the depth value (d1) of the part 710 of the pet dog is the background object where the pet dog 10 is located.

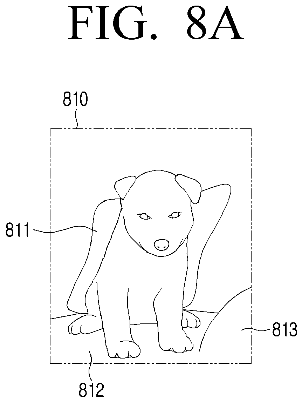

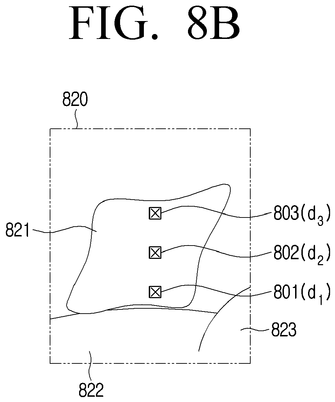

FIGS. 8A and 8B are views provided to explain an operation of identifying an object based on a plurality of images obtained at different time points according to an embodiment.

According to FIG. 8A, a first area 810 including the pet dog on the image obtained by the camera 110 may include a plurality of background objects 811, 812, 813, and among the background objects 811, 812, 813, the background object of which depth value has the smallest difference from the depth value of the pet dog may be a cushion 811.

However, the background object where the pet dog is actually located may not be the cushion 811. In this case, in order to more accurately identify the background object where the pet dog is located, the electronic apparatus 100 may obtain a subsequent image by photographing the same space as the space initially photographed through the camera 110.

According to FIG. 8B, the electronic apparatus 100 may identify a second area 820 corresponding to the first area 810 in the obtained subsequent image, and identify depth information of a plurality of background objects 821, 822, 823 included in the second area 820.

In addition, the electronic apparatus 100 may identify the background object where the pet dog is located based on the depth information of the pet dog identified in the first area 810, the depth information of each of the plurality of background objects 811, 812, 813 identified in the first area 810 and the depth information of the plurality of objects 821, 822, 823 identified in the second area 820.

Specifically, by identifying the depth information of the cushion 821 that is difficult to identify in the first area 810 because it is hidden by the pet dog, the electronic apparatus 100 may identify that the depth value of the cushion gradually decreases from a bottom 801 to a middle 802 and a top 803 (d1 > d2 > d3).

For a plurality of points included in one object, the fact that the depth value of each point decreases towards the top on the image may indicate that the corresponding object is an object standing at an angle equal to or greater than a threshold angle from the ground. Accordingly, the electronic apparatus 100 may identify that the background object where the pet dog is located is one of the other background objects than the cushion 821.

Through the above, even a background object of which depth value has the smallest difference from the depth value of the object of interest, if the object of interest cannot be located in the background object, the electronic apparatus 100 may identify that it cannot be the background object where the object of interest and thus, it is possible to identify the background object where the object of interest is located more accurately.

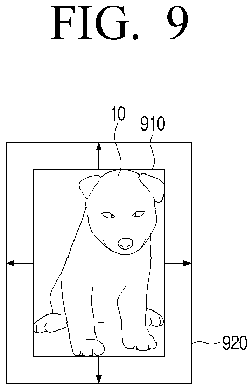

FIG. 9 is a view provided to explain an operation of re-identifying an image according to a ratio of an object of interest in one area of an image according to an embodiment.

According to FIG. 9, the electronic apparatus 100 may identify a first area 910 of a threshold size including the pet dog 10. Here, when it is identified that the ratio of the pet dog 10 in the first area 910 is equal to or greater than a threshold ratio, the electronic apparatus 100 may identify an area larger than the threshold size as a third area 920.

The electronic apparatus 100 may identify depth information of the pet dog 10 and depth information of a plurality of background objects included in an area excluding the pet dog 10 in the third area 920, and identify the background object where the pet dog 10 is located based thereon.

Through the above, even when information regarding the background object excluding the object of interest in the first area is not sufficiently included, the electronic apparatus 100 may more accurately identify the background object where the object of interest is located based on depth information of background objects included in a larger area.

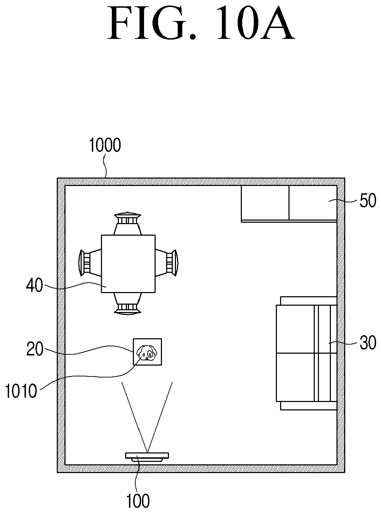

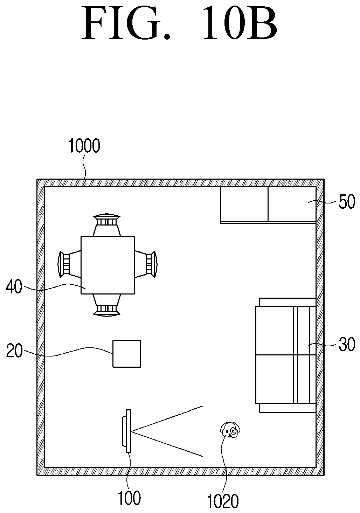

FIGS. 10A and 10B are views provided to explain a map information update operation according to an embodiment.

The electronic apparatus 100 according to an embodiment may further include a memory where map information of an indoor space 1000 is stored.

According to FIG. 10A, a pet dog that is an object of interest may be located on the table 20. In this case, the electronic apparatus 100 may identify that the background object where the pet dog is located is the table 20, and update map information stored in the memory based on the location information of the table 20. At the same time, the electronic apparatus 100 may provide a user with a UI 1010 indicating the location of the pet dog in the updated map information.

According to FIG. 10B, a pet dog that is an object of interest may be located on the ground rather than the furniture 20, 30, 40, 50 disposed in the indoor space. In this case, the electronic apparatus 100 may identify that the background object where the pet dog is located is one point on the ground, and update the map information stored in the memory based on the location information of the identified one point on the ground. At the same time, the electronic apparatus 100 may provide a user with a UI 1020 indicating the location of the pet dog in the updated map information.

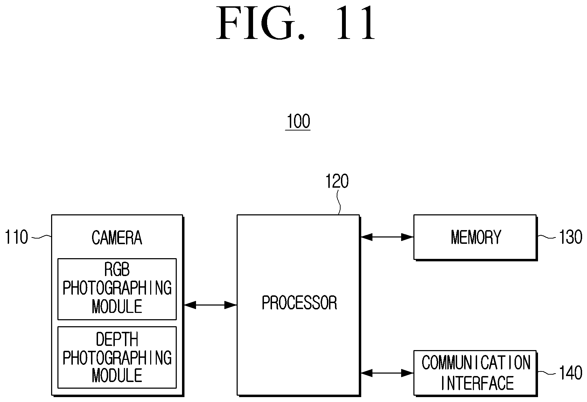

FIG. 11 is a block diagram provided to explain configuration of an electronic apparatus in detail according to an embodiment.

According to FIG. 11, the electronic apparatus 100 may include the camera 110, the processor 120, a memory 130, and a communication interface 140. Among the components illustrated in FIG. 11, detailed description regarding the components overlapping with those illustrated in FIG. 2 will be omitted.

The camera 110 may include an RGB photographing module and a depth photographing module. Here, the processor 120 may identify a first area of a threshold size including an object of interest in an RGB image obtained by the RGB photographing module, and identify depth information of the object of interest and depth information of a plurality of background objects included in an area excluding the object of interest in the first area based on a depth image that is obtained by the depth photographing module and corresponds to the RGB image.

The memory 130 may store data necessary for various embodiments of the present disclosure. The memory 130 may be implemented in the form of a memory embedded in the electronic apparatus 100, or may be implemented in the form of a memory detachable from the electronic apparatus 100, based on a data storing purpose. For example, data for driving the electronic apparatus 100 may be stored in the memory embedded in the electronic apparatus 100, and data for an extension function of the electronic apparatus 100 may be stored in the memory detachable from the electronic apparatus 100. Meanwhile, the memory embedded in the electronic apparatus 100 may be implemented as at least one of a volatile memory (for example, a dynamic random access memory (DRAM), a static RAM (SRAM), or a synchronous dynamic RAM (SDRAM)), a non-volatile memory (for example, an one time programmable read only memory (OTPROM), a programmable ROM (PROM), an erasable and programmable ROM (EPROM), an electrically erasable and programmable ROM (EEPROM), a mask ROM, or a flash ROM), a flash memory (for example, a NAND flash, or a NOR flash), a hard drive, or a solid state drive (SSD)). In addition, the memory detachable from the electronic apparatus 100 may be implemented in the form of a memory card (for example, a compact flash (CF), a secure digital (SD), a micro secure digital (Micro-SD), a mini secure digital (Mini-SD), an extreme digital (xD), or a multi-media card (MMC)), an external memory which may be connected to a universal serial bus (USB) port (for example, a USB memory), or the like.

The memory 130 according to an embodiment may store at least one of a neural network model used to identify map information regarding an indoor space and a first area including an object of interest or a neural network model used to identify a segmentation area corresponding to each of a plurality of objects.

The communication interface 140 may input and output various types of data. For example, the communication interface 140 may receive various types of data from an external device (e.g., source device), an external storage medium (e.g., universal serial bus (USB) memory), an external server (e.g., web hard) or the like by using a communication method such as an access point (AP) based wireless fidelity (Wi-Fi, i.e. wireless local area network (LAN)), a Bluetooth, a Zigbee, a wired/wireless local area network (LAN), a wide area network (WAN), Ethernet, an IEEE 1394, a high definition multimedia interface (HDMI), a USB, a mobile high-definition link (MHL), an audio engineering society/European broadcasting union (AES/EBU) communication, an optical communication or a coaxial communication.

In at least one case of downloading a neural network model stored in an external server or transmitting a UI regarding location information of an object of interest to a user terminal, the processor 120 according to an embodiment may control the communication interface 140 to perform communication with the server or the user terminal.

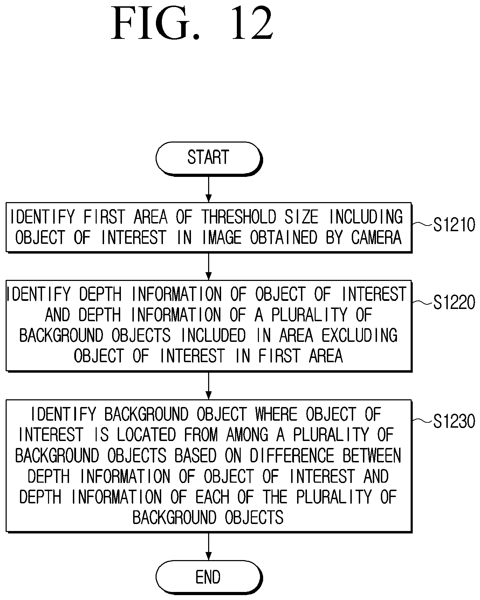

FIG. 12 is a flowchart provided to explain a controlling method according to an embodiment.

According to a controlling method of an electronic apparatus according to an embodiment, a first area of a threshold size including an object of interest is identified in an image obtained by a camera (S1210).

Subsequently, depth information of the object of interest and depth information of a plurality of background objects included in an area excluding the object of interest in the first area identified in S1210 may be identified (S1220).

Then, the background object where the object of interest is located from among the plurality of background objects may be identified based on a difference between the depth information of the object of interest and the depth information of each of the plurality of background objects, which is identified in S1220 (S1230).

Here, the step (S1230) of identifying the background object where the object of interest is located may include identifying an imaging angle of the camera with respect to the object of interest based on location information of the first area on the image, and identifying the background object where the object of interest is located from among a plurality of background objects based on the height information of the camera, the imaging angle of the camera and the depth information of each of the plurality of background objects.

In addition, the controlling method according to an embodiment may include, when the object of interest is not identified in a subsequent image capturing the same space after the object of interest is identified in the image obtained by the camera, identifying a second area corresponding to the first area in the subsequent image and identifying depth information of a plurality of background objects included in the second area. Here, the step (S1230) of identifying the background object where the object of interest is located may include identifying the background object where the object of interest is located from among the plurality of background objects based on depth information of the object of interest identified in the first area, depth information of each of the plurality of background objects identified in the first area and depth information of the plurality of objects identified in the second area.

Meanwhile, the step of identifying depth information (S1220) may include, when the first area of a threshold size including the object of interest is identified in the image, identifying whether the ratio of the object of interest in the first area is equal to or greater than a threshold ratio, and when it is identified that the ratio is equal to or greater than the threshold ratio, identifying an area larger than the threshold size as a third area, and identifying depth information of a plurality of background objects included I an area excluding the object of interest in the third area.

Meanwhile, the step (S1210) of identifying the first area may include obtaining the first area of a threshold size including the object of interest by inputting the obtained image to a neural network model. Here, the neural network model may be a model trained to, when an image is input, output area identification information including the object of interest included in the image and a plurality of background objects.

Meanwhile, the step (S1210) of identifying the first area may include identifying the first area of a threshold size including the object of interest in an RGB image obtained by the camera. In addition, the step (S1220) of identifying depth information may include identifying depth information of the object of interest and depth information of a plurality of background objects included in an area excluding the object of interest in the first area based on a depth image corresponding to the RGB image obtained by the camera.

Meanwhile, the step (S1220) of identifying depth information may include obtaining a segmentation area corresponding to each of the plurality of background objects by inputting the first area to a neural network model, and identifying depth information of the plurality of background objects based on depth information of each segmentation area. Here, the neural network model may be a model trained to, when an image is input, output area identification information corresponding to each of the plurality of background objects included in the image.

Meanwhile, the step (S1230) of identifying the background object where the object of interest is located may include identifying the smallest value between depth information of the object of interest and depth information of each of the plurality of background objects, and identifying the background object corresponding to the smallest value as the background object where the object of interest is located.

Meanwhile, the controlling method according to an embodiment includes identifying location information of the object of interest based on location information of the identified background object, and updating map information based on the identified location information of the object of interest.

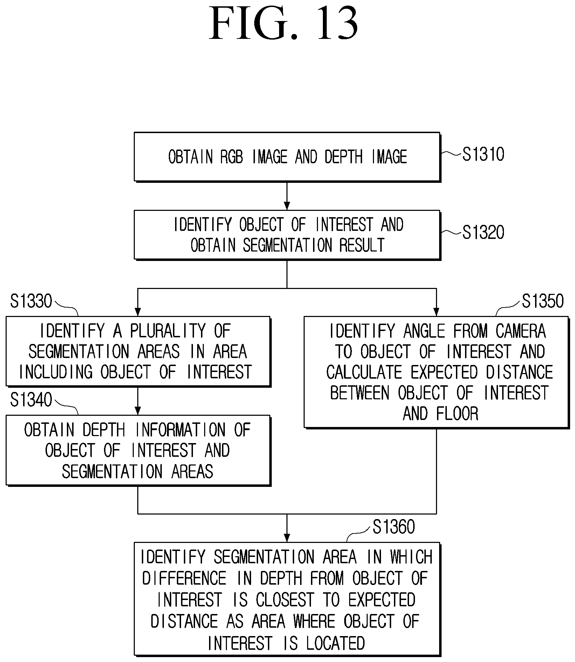

FIG. 13 is a flowchart provided to explain a controlling method according to another embodiment.

According to FIG. 13, a controlling method according to another embodiment includes obtaining an RGB image and a depth image through a camera (S1310).

Subsequently, the method includes identifying an object of interest included in the RGB image obtained in S1310, and obtaining a segmentation area corresponding to a plurality of background objects (S1320).

The method includes identifying a plurality of segmentation areas included in an area of a threshold size including the object of interest identified in S 1320 (S1330).

Subsequently, depth information of the object of interest and the segmentation areas is obtained.

Meanwhile, the controlling method may include identifying an imaging angle from the camera to the object of interest and calculating an expected distance between the object of interest and the ground (S1350). Here, the controlling method may include calculating the expected distance based on the trigonometric ratio of the height of the camera, the imaging angle and the depth value of the object of interest, as described in FIG. 7B.

Subsequently, a segmentation area where a difference in the depth value from the object of interest is closest to the expected distance may be identified as the area where the object of interest is located (S1360).

Meanwhile, the above-described methods according to various embodiments may be implemented in a form of application that may be installed in the existing electronic apparatus.

In addition, the above-described methods according to various embodiments of the disclosure may be implemented only by software upgrade or hardware upgrade of the existing electronic apparatus.

Further, various embodiments of the disclosure described above may also be performed through an embedded server included in the electronic apparatus or at least one external server.

Meanwhile, the diverse embodiments described above may be implemented in a recording medium readable by a computer or a similar device using software, hardware, or a combination of thereof. In some cases, the embodiments described in the disclosure may be implemented in the processor 120 itself. According to software implementation, the embodiments such as procedures and functions described in the disclosure may be implemented as separate software modules. Each of the software modules may perform one or more functions and operations described in the disclosure.

Meanwhile, the computer instructions for performing the processing operation of the electronic apparatus 100 according to the diverse embodiments of the disclosure described above may be stored in a non-transitory readable medium. The computer instructions stored in such a non-transitory computer-readable medium allows a specific device to perform the processing operation in the electronic apparatus 100 according to the above-described various embodiments when being executed by the processor of the specific device.

The non-transitory readable medium is not a medium that stores data for a short time such as a register, a cache, a memory, or the like, but means a machine readable medium that semi-permanently stores data. Specific examples of the non-transitory readable medium include a compact disk (CD), a digital versatile disk (DVD), a hard disk, a Blu-ray disk, a universal serial bus (USB), a memory card, a read only memory (ROM), or the like.

Although embodiments of the disclosure have been illustrated and described herein, the disclosure is not limited thereto, and various modifications may be made by those of ordinary skill in the art without departing from the gist of the disclosure defined in the appended claims and should not be understood separately from the technical idea or prospect of the disclosure.

## Claims

1. An electronic apparatus comprising:
a camera; and
a processor configured to:
identify a first area of a threshold size in an image obtained by the camera, the first area including an object of interest;
identify depth information of the object of interest and depth information of a plurality of background objects included in an area excluding the object of interest in the first area; and
identify a background object where the object of interest is located from among the plurality of background objects based on a difference between the depth information of the object of interest and the depth information of each of the plurality of background objects.

2. The electronic apparatus as claimed in claim 1, wherein the processor is further configured to:
identify an imaging angle of the camera with respect to the object of interest based on location information of the first area on the image; and
identify the background object where the object of interest is located from among the plurality of background objects based on height information of the camera, the imaging angle of the camera and depth information of each of the plurality of background obj ects.

3. The electronic apparatus as claimed in claim 1, wherein the processor is configured to:
based on the object of interest not being identified in a subsequent image that captured the same space after the object of interest is identified in the image obtained by the camera, identify a second area corresponding to the first area in the subsequent image and identify depth information of a plurality of background objects included in the second area; and
identify the background object where the object of interest is located from among the plurality of background objects based on depth information of the object of interest identified in the first area, depth information of the plurality of background objects identified in the first area and depth information of the plurality of background objects identified in the second area.

4. The electronic apparatus as claimed in claim 1, wherein the processor is configured to:
based on identifying the first area of a threshold size including the object of interest in the image, identify whether a ratio of the object of interest in the first area is equal to or greater than a threshold ratio;
based on identifying that the ratio is equal to or greater than the threshold ratio, identify an area larger than the threshold size in the image as a third area; and
identify depth information of the object of interest and depth information of a plurality of background objects included in an area excluding the object of interest in the third area.

5. The electronic apparatus as claimed in claim 1, wherein the processor is configured to obtain the first area of the threshold size including the object of interest by inputting the obtained image to a neural network model, and
wherein the neural network model is trained to, based on an image being input, output the object of interest included in the image and area identification information including a plurality of background objects.

6. The electronic apparatus as claimed in claim 1, wherein the camera comprises a red-green-blue (RGB) photographing module and a depth photographing module; and
wherein the processor is further configured to:
identify the first area of the threshold size including the object of interest in an RGB image obtained by the RGB photographing module; and
identify depth information of the object of interest and depth information of the plurality of background objects included in an area excluding the object of interest in the first area based on a depth image corresponding to the RGB image obtained by the depth photographing module.

7. The electronic apparatus as claimed in claim 1, wherein the processor is further configured to:
obtain a segmentation area corresponding to each of the plurality of background objects by inputting the first area to a neural network model; and
identify depth information of the plurality of background objects based on depth information of each segmentation area, and
wherein the neural network model is trained to, based on an image being input, output area identification information corresponding to each of the plurality of background objects included in the image.

8. The electronic apparatus as claimed in claim 1, wherein the processor is further configured to identify a smallest value from among differences between the depth information of the object of interest and the depth information of each of the plurality of background objects, and identify a background object corresponding to the smallest value as a background object where the object of interest is located.

9. The electronic apparatus as claimed in claim 1, further comprising:
a memory configured to store map information,
wherein the processor is further configured to:
identify location information of the object of interest based on location information of the identified background object; and
update the map information based on the identified location information of the object of interest.

10. A method of controlling an electronic apparatus, the method comprising:
identifying a first area of a threshold in an image obtained by a camera, the first area including an object of interest;
identifying depth information of the object of interest and depth information of a plurality of background objects included in an area excluding the object of interest in the first area; and
identifying a background object where the object of interest is located from among the plurality of background objects based on a difference between the depth information of the object of interest and the depth information of each of the plurality of background objects.

11. The method as claimed in claim 10, wherein the identifying the background object where the object of interest is located comprises:
identifying an imaging angle of the camera with respect to the object of interest based on location information of the first area in the image; and
identifying the background object where the object of interest is located from among a plurality of background objects based on height information of the camera, the imaging angle of the camera and the depth information of each of the plurality of background objects.

12. The method as claimed in claim 10, further comprising:
based on the object of interest not being identified in a subsequent image that captured the same space after the object of interest is identified in the image obtained by the camera, identifying a second area corresponding to the first area in the subsequent image and identifying depth information of a plurality of background objects included in the second area,
wherein the identifying the background object where the object of interest is located comprisses:
identifying the background object where the object of interest is located from among the plurality of background objects based on depth information of the object of interest identified in the first area, depth information of each of the plurality of background objects identified in the first area and depth information of the plurality of background objects identified in the second area.

13. The method as claimed in claim 10, wherein the identifying depth information comprises:
based on identifying the first area of a threshold size including the object of interest in the image, identifying whether a ratio of the object of interest in the first area is equal to or greater than a threshold ratio;
based on identifying that the ratio is equal to or greater than the threshold ratio, identifying an area larger than the threshold size in the image as a third area; and
identifying depth information of the object of interest and depth information of a plurality of background objects included in an area excluding the object of interest in the third area.

14. The method as claimed in claim 10, wherein the identifying the first area comprises:
obtaining the first area of the threshold size including the object of interest by inputting the obtained image to a neural network model, and
wherein the neural network model is trained to, based on the image being input, output the object of interest included in the image and area identification information including a plurality of background objects.

15. The method as claimed in claim 10, wherein the identifying the first area comprises:
identifying the first area of the threshold size including the object of interest in red-green-blue (RGB) image obtained by the camera, and
wherein the identifying depth information comprises identifying depth information of the object of interest and depth information of a plurality of background objects included in an area excluding the object of interest in the first area based on a depth image corresponding to the RGB image obtained by the camera.
